# EUROPEAN PATENT SPECIFICATION

(11) **EP 4 521 228 B1**
(45) Date of publication and mention of the grant of the patent: **13.05.2026**
(21) Application number: 24197717.2
(22) Date of filing: 30.08.2024
(51) Int. Cl.: G06F 3/06, G06F 13/42, G06F 8/60

(54) **SYSTEM DEPLOYMENT METHOD, APPARATUS, ELECTRONIC DEVICE AND STORAGE MEDIUM**
SYSTEMEINSATZVERFAHREN, VORRICHTUNG, ELEKTRONISCHE VORRICHTUNG UND SPEICHERMEDIUM
PROCÉDÉ DE DÉPLOIEMENT DE SYSTÈME, APPAREIL, DISPOSITIF ÉLECTRONIQUE ET SUPPORT D'INFORMATIONS

(30) Priority: 06.09.2023 CN 202311149179
(43) Date of publication of application: 12.03.2025
(73) Proprietor: New H3C Information Technologies Co., Ltd., Zhejiang 310056 (CN)
(72) Inventor: YU, Yinting, Beijing (CN)
(74) Representative: Bandpay & Greuter

(56) References cited:
- US-A1- 2022 043 607
- US-A1- 2023 017 583

## Description

### TECHNICAL FIELD

The present disclosure relates to the field of wireless communication technology, and in particular to a system deployment method, a system deployment apparatus, an electronic device and a machine-readable storage medium.

### BACKGROUND

Compute Express Link (CXL) is an interconnection designed for memory expansion, heterogeneous computing, and system resource decomposition. Using CXL provides efficient resource sharing and pooling, while maintaining low latency and high bandwidth through cache-coherent load-store semantics.

CXL Fabric Management (FM) is responsible for system combination and resource allocation. FM can be embedded in CXL switches, server hosts, or BMCs. FM manages apparatuses, such as Signal Logical Devices (SLD), Multi Logical Devices (MLD), switches, and pool memory controllers through the component command interface FM API. Its role here is to allocate memories from the memory pool to specific hosts.
US2023017583A1 discloses systems, methods, and products utilizing a cache coherent switch on chip, where the cache coherent switch on chip may utilize CXL interconnect open standard.

### SUMMARY

In view of the forgoing, the present application provides a system deployment method and apparatus, an electronic device and a machine-readable storage medium to improve the above problem that system deployments must rely on network transmission.

Specific technical solutions are as follows.

The present application provides a system deployment method applied to a CXL manager, where the method comprises: configuring a shared memory for a CXL server in response to a shared memory configuration request from the CXL server, wherein the shared memory is for storing files to be deployed, which are written into the shared memory by the CXL server in response to an event that the CXL manager completes configuration of the shared memory for the CXL server; generating a shared memory mapping table based on the shared memory configured for the CXL server, wherein the shared memory mapping table is for maintaining the configured shared memory and recording storage addresses of the files to be deployed that have been written into the configured shared memory; sending shared information to a CXL terminal in response to a CXL interaction request from the CXL terminal, wherein the shared information comprises the storage addresses of the files to be deployed, and the shared information is for enabling the CXL terminal to obtain the files to be deployed that have been written into the shared memory based on the shared information.

The present application further provides a system employment apparatus applied to a CXL manager, where the apparatus comprises: a first module, configured to configure a shared memory for a CXL server in response to a shared memory configuration request from the CXL server, wherein the shared memory is to store files to be deployed, which are written into the shared memory by the CXL server in response to an event that the CXL manager completes configuration of the shared memory for the CXL server; a second module, configured to generate a shared memory mapping table based on the shared memory configured for the CXL server, wherein the shared memory mapping table is for maintaining the configured shared memory and recording storage addresses of the files to be deployed that have been written into the configured shared memory; a third module, configured to send shared information to a CXL terminal in response to a CXL interaction request from the CXL terminal, wherein the shared information comprises the storage addresses of the files to be deployed, and the shared information is for enabling the CXL terminal to obtain the files to be deployed that have been written into the shared memory based on the shared information.

The present application further provides an electronic device including a processor and a machine-readable storage medium, where the machine-readable storage medium stores machine-executable instructions that are able to be executed by the processor, the processor executes these machine-executable instructions to perform the aforementioned system deployment method.

The present application further provides a machine-readable storage medium, where the machine-readable storage medium stores machine-executable instructions, which, when invoked and executed by a processor, cause the processor to perform the aforementioned system deployment method.

### BRIEF DESCRIPTION OF DRAWINGS

**In** order to more clearly illustrate the technical solutions in the embodiments of the present application or the prior art, the accompanying drawings need to be used in the description of the embodiments of the present application or the prior art will be briefly introduced in the following. It is obvious that the accompanying drawings in the following description are merely some of the embodiments recorded in the present application, and for a person of ordinary skill in the field, it is possible to obtain other accompanying drawings based on these accompanying drawings of the embodiments of the present application.
FIG. 1 is an example flowchart of a system deployment method according to the present disclosure;
FIG. 2 is an example flowchart of a system deployment method according to the present disclosure;
FIG. 3 is an example hardware structural diagram of an electronic device according to the present disclosure.

### DETAILED DESCRIPTION

The present disclosure will be described below with reference to a plurality of examples shown in the drawings. The terminology used in the present disclosure is for the purpose of describing particular examples only, and is not intended to be limiting of the present disclosure. The singular forms such as "a", "said", and "the" used in the present disclosure and the appended claims are further intended to include multiple, unless the context clearly indicates otherwise. It is also to be understood that the term "and/or" as used herein refers to any or all possible combinations that include one or more associated listed items.

It is to be understood that although various information may be described using the terms such as first, second, third, etc. In the present disclosure, these information should not be limited to these terms. These terms are used only to distinguish the same type of information from each other. For example, the first information may also be referred to as the second information without departing from the scope of the present disclosure, and similarly, the second information may also be referred to as the first information. Depending on the context, the word "if" as used herein may be interpreted as "when" or "as" or "determining in response to".

The traditional way of server OS deployment, such as PXE or KVM out-of-band installation system based on the BMC, cannot bypass the transmission of an image of a system via the Ethernet network port from the remote end, and only after the transmission is completed, can start the installation of the image of the system, and requires complex environment deployment in advance.

A specific implementation is as follows.

In an example of present disclosure, a system deployment method is applied to a CXL manager. The method comprises: configuring shared memory for a CXL server in response to a shared memory configuration request from the CXL server, where the shared memory is used to store files to be deployed which are written into the shared memory by the CXL server in response to an event that the CXL manager completes the configuration of the shared memory for the CXL server; generating a shared memory mapping table based on the shared memory configured for the CXL server, where the shared memory mapping table is used to maintain the configured shared memory and record the storage addresses of the files to be deployed that have been written into the configured shared memory; sending shared information to a CXL terminal in response to a CXL interaction request from the CXL terminal, where the shared information comprises the storage addresses of the files to be deployed, enabling the CXL terminal to obtain the files to be deployed that have been written into the shared memory based on the shared information.

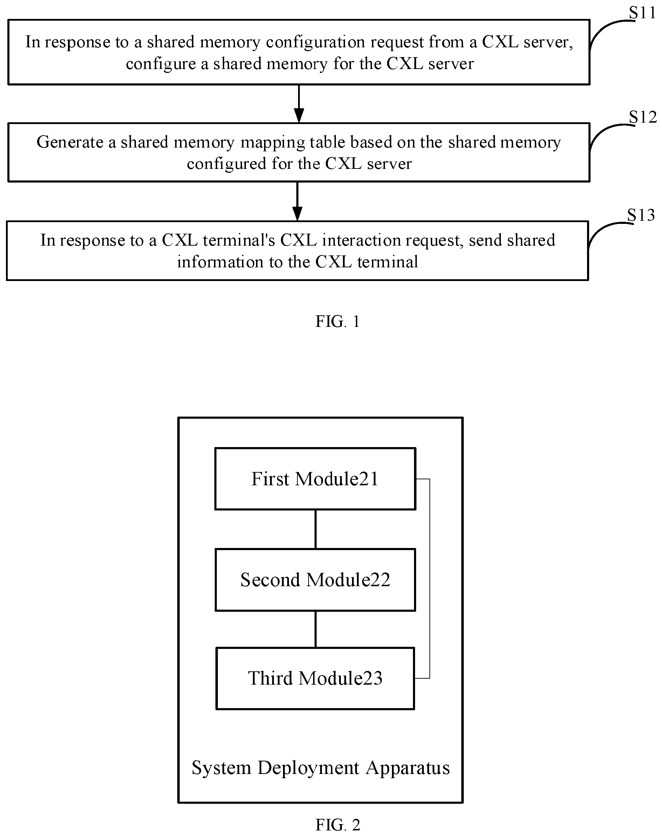

As shown in FIG. 1, this example comprises the following Steps:
Step S11: Configuring a shared memory for a CXL server in response to a shared memory configuration request from the CXL server;
Step S12: Generating a shared memory mapping table based on the shared memory configured for the CXL server;
Step S13: Sending shared information to a CXL terminal in response to a CXL interaction request from the CXL terminal.

The CXL server distributing the files to be deployed will transfer the files into the shared memory. Several CXL terminals that can read from and write to the shared memory can access these files to be deployed stored in the shared memory in the manner of memory access, and complete system deployment based on these files. This allows for batch system deployment without the need to transmit the files to be deployed to the terminals via network.

In one embodiment, the method comprises a process of: configuring shared memory for the CXL server in response to a shared memory configuration request from the CXL server, where the shared memory is used to store files to be deployed which are written into the shared memory by the CXL server in response to the event that the CXL manager completes configuration of the shared memory for the CXL server. This process comprises: configuring CXL shared memory in response to a shared memory configuration request from the CXL server; invoking a process to further configure a memory disk area in the configured CXL shared memory; storing the files to be deployed transmitted by the CXL server in the memory disk area.

Virtualizing memory as a hard disk in the shared memory, configuring a memory disk area, and storing the files to be deployed in the memory disk.

In one embodiment, generating a shared memory mapping table based on the shared memory configured for the CXL server, where the shared memory mapping table is used to maintain the configured shared memory and record the storage addresses of the files to be deployed that have been written into the configured shared memory, comprises: the memory mapping table comprises CXL shared memory base address and the storage addresses of the files to be deployed in the memory disk.

The base address of the shared memory and the storage addresses of the files to be deployed in the memory disk are recorded so that the CXL terminal can find the location of the shared memory based on the base address and load it, then obtain the files to be deployed based on their storage addresses.

In one embodiment, sending shared information to the CXL terminal in response to a CXL interaction request from the CXL terminal, where the shared information comprises the storage addresses of the files to be deployed, so as to enable the CXL terminal to obtain the files to be deployed that have been written into the shared memory based on the shared information, comprises: the shared information comprises the CXL shared memory base address and the storage addresses of the files to be deployed in the memory disk. The shared information enables the CXL terminal to recognize the memory disk through Unified Extensible Firmware Interface (UEFI) and boot, so as to deploy the system comprised in the files to be deployed.

When the files to be deployed are an image of the system to be deployed, the CXL terminal can identify the memory disk in UEFI mode and boot from the image within the memory disk, and further load and deploy the system comprised in the files to be deployed under the guidance of the boot image.

In one embodiment, the CXL terminal (CXL boot client) can recognize the addresses in the shared memory and the location of the ISO boot image, thereby booting from the shared memory and further performing the installation of the system.

If the CXL server (CXL boot Server) as Host1 has completed the shared memory configuration process via FM, Host1 will write the OS system image to the corresponding shared memory Base + ISO Mem Offset. FM's role here, besides allocating memory pool memory, is to maintain the shared memory mapping table. The mapping table maintains the memory blocks shared by CXL servers and the storage address of the ISO image. For any CXL terminal as Host2, for instance, the CXL boot client in Host2 initiates a CXL boot request (CXL interaction request). If FM finds an ISO image shared pool, it returns the memory address ISO Mem Offset of the image location. Host2 can locate the ISO image based on the shared memory base address + ISO Mem Offset returned by FM. If there is no shareable image offset area, the CXL server is required to apply for a CXL shared memory and write the ISO image from the CXL boot Server into the shared memory block while maintaining the storage position of the ISO image.

FM can run on the CXL server or as an independent apparatus.

In one example of the disclosure, a system deployment apparatus is provided and may be as shown in Figure 2, applied to the CXL manager. The apparatus comprises: a first module (21), configured to configure shared memory for the CXL server in response to a shared memory configuration request from the CXL server, where the shared memory is used for storing files to be deployed , which are written into the shared memory by the CXL server in response to an event that the CXL manager completes configuration of the shared memory for the CXL server; a second module (22), configured to generate a shared memory mapping table based on the shared memory configured for the CXL server, where the shared memory mapping table is used to maintain the configured shared memory and record the storage addresses of the files to be deployed that have been written into the shared memory; and a third module (23), configured to send shared information to the CXL terminal in response to a CXL interaction request from the CXL terminal, where the shared information comprises the storage addresses of the files to be deployed. The shared information is used to enable the CXL terminal to obtain the files to be deployed that have been written into the shared memory based on the shared information.

In one embodiment, configuring the shared memory for the CXL server in response to the shared memory configuration request from the CXL server, where the shared memory is used to store files to be deployed, which are written into the shared memory by the CXL server in response to the event that the CXL manager completes configuration of the shared memory for the CXL server, comprises: configuring a CXL shared memory in response to a shared memory configuration request from the CXL server; invoking a process to further configure a memory disk area in the configured CXL shared memory; and storing the files to be deployed transmitted by the CXL server in the memory disk area.

In one embodiment, generating the shared memory mapping table based on the shared memory configured for the CXL server, where the shared memory mapping table is used to maintain the configured shared memory and record the storage addresses of the files to be deployed that have been written into the configured shared memory, comprises: the shared memory mapping table comprising a CXL shared memory base address and the storage addresses of the files to be deployed in the memory disk area.

In one implementation, in response to the CXL interaction request from the CXL terminal, sending shared information to the CXL terminal, where the shared information includes the storage address of the files to be deployed, and the shared information is used to enable the CXL terminal to obtain the files to be deployed that have been already written to the shared memory according to the shared information, comprises: the shared information including the CXL shared memory base address and the storage addresses of the files to be deployed in the memory disk area, where the shared information is used to enable the CXL terminal to identify the memory disk area and boot through UEFI according to the shared information, so as to deploy a system that included in the files to be deployed.

The apparatus embodiments are the same or similar to the corresponding method embodiments and will not be repeated here.

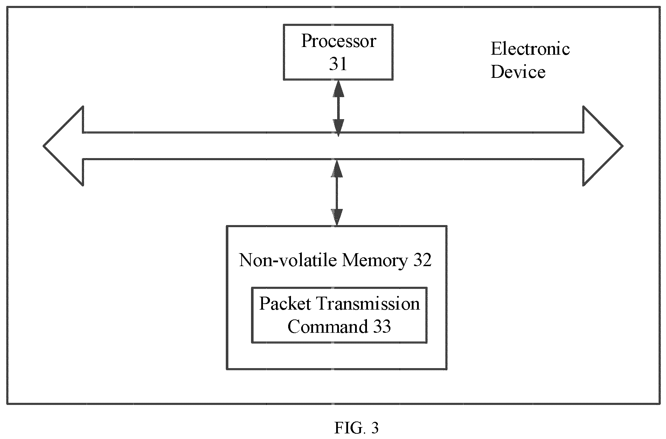

In one embodiment, the disclosure provides an electronic device including a processor (31) and a machine-readable storage medium, where the machine-readable storage medium stores machine-executable instructions that can be executed by the processor. The processor executes these machine-executable instructions to perform the aforementioned system deployment method. The hardware architecture schematic diagram can be referred to in FIG. 3.

In one embodiment, the disclosure provides a machine-readable storage medium. The machine-readable storage medium stores machine-executable instructions. When these instructions are invoked and executed by a processor, they cause the processor to perform the aforementioned system deployment method.

The CXL server distributing the files to be deployed will transfer the files to be deployed to the shared memory. Several CXL terminals with read and write accesses to the shared memory can access the files to be deployed stored in the shared memory and complete the system deployment based on the files to be deployed, thus achieving batch system deployment without the need to transfer the files to be deployed to the terminals via the network.

Here, the machine-readable storage medium can be any electronic, magnetic, optical, or other physical storage apparatus that can contain or store information, e.g. executable instructions, data, etc. For example, the machine-readable storage medium can be: a Random Access Memory(RAM), a volatile memory, a non-volatile memory, a flash memory, storage drives, e.g. a hard disk drive, a solid-state drive, any type of storage disk e.g. CDs, DVDs, or a similar storage media, or their combination.

The systems, apparatus, modules, or units described in the above embodiments can be implemented by computer chips or entities or by products with certain functions. A typical implementation apparatus is a computer, and the specific form of the computer can be a personal computer, a laptop, a cellular phone, a camera phone, a smartphone, a personal digital assistant, a media player, a navigation apparatus, an email receiving and sending apparatus, a game console, a tablet computer, a wearable apparatus or a combination of several of these apparatuses.

For ease of description, the above apparatus are described by dividing functions into modules. It should be understood that the functions of the various units can be realized in the same or multiple softwares and/or hardwares while implementing this disclosure.

Those skilled in the art should understand that the embodiments of this disclosure can be made available as methods, systems, or computer program products. Therefore, this disclosure can be implemented as any combination of hardware and software. Additionally, this disclosure can be implemented as a computer program product applied to one or more computer-readable storage medium containing computer-readable program code, i.e., magnetic disks, CD-ROMs, optical storage medium.

This disclosure has been described in terms of methods, apparatuses (systems), and computer program products with reference to flowcharts and/or block diagrams. It should be understood that each flow or block in the flowcharts and/or block diagrams and combinations of flows or blocks can be implemented by computer program instructions. These computer program instructions can be provided to a general-purpose computer, a special-purpose computer, an embedded processor, or other programmable data processing apparatuses to produce a machine, such that instructions executed by a computer or other programmable data processing apparatuses generate means for implementing the functions specified in one or more flows of the flowcharts and/or one or more blocks of the block diagrams.

The computer program instructions may also be stored in a computer-readable memory that can direct a computer or other programmable data processing apparatuses to function in a particular manner, such that the instructions stored in the computer-readable memory produce an article of manufacture including instruction means which implement the function specified in one or more flows of the flowcharts and/or one or more blocks of the block diagrams.

These computer program instructions can also be loaded onto a computer or other programmable data processing apparatuses to cause a series of operational steps to be performed on the computer or other programmable apparatuses to produce computer-implemented processing. Thus, the instructions that run on the computer or other programmable apparatuses provide steps for implementing the functions specified in one or more flows of the flowcharts and/or one or more blocks of the block diagrams.

Those skilled in the art should understand that the embodiments of this disclosure can be provided as methods, systems, or computer program products. Therefore, the disclosure can be implemented as a hardware, a software or any combination of hardware and software. Additionally, the disclosure can be implemented as a computer program product applied to one or more computer-readable storage medium containing computer-readable program code, which may include but is not limited to magnetic disks, CD-ROMs, optical storage medium.

## Claims

1. A system deployment method, applied to a Compute Express Link, CXL, manager, wherein the method comprises:
(S11) configuring a shared memory for a CXL server in response to a shared memory configuration request from the CXL server, wherein the shared memory is for storing files to be deployed, which are written into the shared memory by the CXL server in response to an event that the CXL manager completes configuration of the shared memory for the CXL server;
(S12) generating a shared memory mapping table based on the shared memory configured for the CXL server, wherein the shared memory mapping table is for maintaining the configured shared memory and recording storage addresses of the files to be deployed that have been written into the configured shared memory;
(S13) sending shared information to a CXL terminal in response to a CXL interaction request from the CXL terminal, wherein the shared information comprises the storage addresses of the files to be deployed, and the shared information is for enabling the CXL terminal to obtain the files to be deployed that have been written into the shared memory based on the shared information.

2. The method of claim 1, wherein configuring the shared memory for the CXL server in response to the shared memory configuration request from the CXL server, wherein the shared memory is for storing files to be deployed, which are written into the shared memory by the CXL server in response to the event that the CXL manager completes configuration of the shared memory for the CXL server, comprises:
configuring a CXL shared memory in response to a shared memory configuration request from the CXL server, invoking a process to further configure a memory disk area in the configured CXL shared memory, and storing the files to be deployed transmitted by the CXL server in the memory disk area.

3. The method of claim 2, wherein generating the shared memory mapping table based on the shared memory configured for the CXL server, wherein the shared memory mapping table is for maintaining the configured shared memory and recording the storage addresses of the files to be deployed that have been written into the configured shared memory, wherein the method further comprises:
the shared memory mapping table comprises a CXL shared memory base address and the storage addresses of the files to be deployed in the memory disk area.

4. The method of claim 3, wherein sending shared information to the CXL terminal in response to the CXL interaction request from the CXL terminal, wherein the shared information comprises the storage addresses of the files to be deployed, and the shared information is for enabling the CXL terminal to obtain the files to be deployed that have been written into the shared memory based on the shared information, comprises:
the shared information comprises the CXL shared memory base address and the storage addresses of the files to be deployed in the memory disk area, and the shared information is for enabling the CXL terminal to recognize the memory disk area through Unified Extensible Firmware Interface, UEFI, and boot, so as to deploy a system comprised in the files to be deployed.

5. A system deployment apparatus, adapted to be applied to a Compute Express Link, CXL, manager, wherein the apparatus comprises:
a first module (21), configured to configure a shared memory for a CXL server in response to a shared memory configuration request from the CXL server, wherein the shared memory is for storing files to be deployed, which are written into the shared memory by the CXL server in response to an event that the CXL manager completes configuration of the shared memory configuration for the CXL server;
a second module (22), configured to generate a shared memory mapping table based on the shared memory configured for the CXL server, wherein the shared memory mapping table is for maintaining the configured shared memory and recording storage addresses of the files to be deployed that have been written into the configured shared memory;
a third module (23), configured to send shared information to a CXL terminal in response to a CXL interaction request from the CXL terminal, wherein the shared information comprises the storage addresses of the files to be deployed, and the shared information is for enabling the CXL terminal to obtain the files to be deployed that have been written into the shared memory based on the shared information.

6. The apparatus of claim 5, wherein configuring the shared memory for the CXL server in response to the shared memory configuration request from the CXL server, wherein the shared memory is for storing files to be deployed, which are written into the shared memory by the CXL server in response to the event that the CXL manager completes configuration of the shared memory for the CXL server, comprises:
configuring a CXL shared memory in response to a shared memory configuration request from the CXL server, invoking a process to further configure a memory disk area in the configured CXL shared memory, and storing the files to be deployed transmitted by the CXL server in the memory disk area.

7. The apparatus of claim 6, wherein generating the shared memory mapping table based on the shared memory configured for the CXL server, wherein the shared memory mapping table is for maintaining the configured shared memory and recording the storage addresses of the files to be deployed that have been written into the configured shared memory, comprises:
the shared memory mapping table comprises a CXL shared memory base address and the storage addresses of the files to be deployed in the memory disk area.

8. The apparatus of claim 7, wherein sending shared information to the CXL terminal in response to the CXL interaction request from the CXL terminal, wherein the shared information comprises the storage addresses of the files to be deployed, and the shared information is for enabling the CXL terminal to obtain the files to be deployed that have been written into the shared memory based on the shared information, comprises:
the shared information comprises the CXL shared memory base address and the storage addresses of the files to be deployed in the memory disk area, and the shared information is for enabling the CXL terminal to recognize the memory disk area through Unified Extensible Firmware Interface, UEFI, and boot, so as to deploy a system comprised in the files to be deployed.

9. A machine-readable storage medium, wherein the machine-readable storage medium stores machine-executable instructions, which, when invoked and executed by a processor, cause the processor to perform the method according to any one of claims 1 to 4.

10. An electronic device, comprising: a processor (31) and a machine-readable storage medium according to claim 9.

## Patentansprüche

1. Systemeinsatzverfahren, das auf einen Manager einer Compute Express Link, CXL, angewendet wird, wobei das Verfahren Folgendes umfasst:
(S11) Konfigurieren eines gemeinsam genutzten Speichers für einen CXL-Server als Reaktion auf eine Konfigurationsanforderung für gemeinsam genutzten Speicher von dem CXL-Server, wobei der gemeinsam genutzte Speicher zum Speichern von einzusetzenden Dateien dient, die durch den CXL-Server als Reaktion auf ein Ereignis, dass der CXL-Manager die Konfiguration des gemeinsam genutzten Speichers für den CXL-Server vervollständigt, in den gemeinsam genutzten Speicher geschrieben werden;
(S12) Erzeugen einer Zuordnungstabelle für gemeinsam genutzten Speicher basierend auf dem gemeinsam genutzten Speicher, der für den CXL-Server konfiguriert ist, wobei die Zuordnungstabelle für gemeinsam genutzten Speicher zum Beibehalten des konfigurierten gemeinsam genutzten Speichers und Aufzeichnen von Speicheradressen der einzusetzenden Dateien, die in den konfigurierten gemeinsam genutzten Speicher geschrieben wurden, ist;
(S13) Senden von gemeinsam genutzten Informationen an ein CXL-Endgerät als Reaktion auf eine CXL-Interaktionsanforderung von dem CXL-Endgerät, wobei die gemeinsam genutzten Informationen die Speicheradressen der einzusetzenden Dateien umfassen und die gemeinsam genutzten Informationen dazu sind, das CXL-Endgerät in die Lage zu versetzen, die einzusetzenden Dateien zu erlangen, die basierend auf den gemeinsam genutzten Informationen in den gemeinsamen Speicher geschrieben worden sind.

2. Verfahren nach Anspruch 1, wobei ein Konfigurieren des gemeinsam genutzten Speichers für einen CXL-Server als Reaktion auf eine Konfigurationsanforderung für gemeinsam genutzten Speicher von dem CXL-Server, wobei der gemeinsam genutzte Speicher zum Speichern von einzusetzenden Dateien dient, die durch den CXL-Server als Reaktion auf das Ereignis, dass der CXL-Manager die Konfiguration des gemeinsam genutzten Speichers für den CXL-Server vervollständigt, in den gemeinsam genutzten Speicher geschrieben werden, Folgendes umfasst:
Konfigurieren eines gemeinsam genutzten CXL-Speichers als Reaktion auf eine Konfigurationsanforderung für den gemeinsam genutzten Speicher von dem CXL-Server, Aufrufen eines Prozesses, um weiter einen Speicherplattenbereich in dem konfigurierten gemeinsam genutzten CXL-Speicher zu konfigurieren, und Speichern der von dem CXL-Server übertragenen Dateien, die eingesetzt werden sollen, in dem Speicherplattenbereich.

3. Verfahren nach Anspruch 2, wobei ein Erzeugen der Zuordnungstabelle für gemeinsam genutzten Speicher basierend auf dem gemeinsam genutzten Speicher, der für den CXL-Server konfiguriert ist, wobei die Zuordnungstabelle für gemeinsam genutzten Speicher zum Beibehalten des konfigurierten gemeinsam genutzten Speichers und Aufzeichnen von Speicheradressen der einzusetzenden Dateien, die in den konfigurierten gemeinsam genutzten Speicher geschrieben wurden, wobei das Verfahren ferner Folgendes umfasst:
die Zuordnungstabelle für den gemeinsam genutzten Speicher umfasst eine Basisadresse für gemeinsam genutzten CXL-Speicher und die Speicheradressen der Dateien, die in dem Speicherplattenbereich eingesetzt werden sollen.

4. Verfahren nach Anspruch 3, wobei ein Senden von gemeinsam genutzten Informationen an das CXL-Endgerät als Reaktion auf die CXL-Interaktionsanforderung von dem CXL-Endgerät, wobei die gemeinsam genutzten Informationen die Speicheradressen der einzusetzenden Dateien umfassen und die gemeinsam genutzten Informationen dazu sind, das CXL-Endgerät in die Lage zu versetzen, die einzusetzenden Dateien zu erlangen, die basierend auf den gemeinsam genutzten Informationen in den gemeinsamen Speicher geschrieben worden sind, Folgendes umfasst:
die gemeinsam genutzten Informationen umfassen die Basisadresse für gemeinsam genutzten CXL-Speicher und die Speicheradressen der Dateien, die in dem Speicherplattenbereich einzusetzen sind, und die gemeinsam genutzten Informationen dienen dazu, das CXL-Terminal in die Lage zu versetzen, den Speicherplattenbereich über die einheitliche erweiterbare Firmware-Schnittstelle, UEFI, zu erkennen und zu booten, um ein System einzusetzen, das in den einzusetzenden Dateien enthalten ist.

5. Systemeinsatzvorrichtung, die angepasst ist, um auf einen Manager einer Compute Express Link, CXL, angewendet zu werden, wobei die Vorrichtung Folgendes umfasst:
ein erstes Modul (21), das konfiguriert ist, um einen gemeinsam genutzten Speicher für einen CXL-Server als Reaktion auf eine Konfigurationsanforderung für gemeinsam genutzten Speicher von dem CXL-Server zu konfigurieren, wobei der gemeinsam genutzte Speicher zum Speichern von einzusetzenden Dateien dient, die durch den CXL-Server als Reaktion auf ein Ereignis, dass der CXL-Manager eine Konfiguration der Konfiguration des gemeinsam genutzten Speichers für den CXL-Server vervollständigt, in den gemeinsam genutzten Speicher geschrieben werden;
ein zweites Modul (22), das konfiguriert ist, um eine Zuordnungstabelle für gemeinsam genutzten Speicher basierend auf dem gemeinsam genutzten Speicher zu erzeugen, der für den CXL-Server konfiguriert ist, wobei die Zuordnungstabelle für gemeinsam genutzten Speicher zum Beibehalten des konfigurierten gemeinsam genutzten Speichers und Aufzeichnen von Speicheradressen der einzusetzenden Dateien, die in den konfigurierten gemeinsam genutzten Speicher geschrieben wurden, ist;
ein drittes Modul (23), das konfiguriert ist, um gemeinsam genutzte Informationen an ein CXL-Endgerät als Reaktion auf eine CXL-Interaktionsanforderung von dem CXL-Endgerät zu senden, wobei die gemeinsam genutzten Informationen die Speicheradressen der einzusetzenden Dateien umfassen und die gemeinsam genutzten Informationen dazu sind, das CXL-Endgerät in die Lage zu versetzen, die einzusetzenden Dateien zu erlangen, die basierend auf den gemeinsam genutzten Informationen in den gemeinsamen Speicher geschrieben worden sind.

6. Vorrichtung nach Anspruch 5, wobei ein Konfigurieren des gemeinsam genutzten Speichers für einen CXL-Server als Reaktion auf eine Konfigurationsanforderung für gemeinsam genutzten Speicher von dem CXL-Server, wobei der gemeinsam genutzte Speicher zum Speichern von einzusetzenden Dateien dient, die durch den CXL-Server als Reaktion auf das Ereignis, dass der CXL-Manager die Konfiguration des gemeinsam genutzten Speichers für den CXL-Server vervollständigt, in den gemeinsam genutzten Speicher geschrieben werden, Folgendes umfasst:
Konfigurieren eines gemeinsam genutzten CXL-Speichers als Reaktion auf eine Konfigurationsanforderung für den gemeinsam genutzten Speicher von dem CXL-Server, Aufrufen eines Prozesses, um weiter einen Speicherplattenbereich in dem konfigurierten gemeinsam genutzten CXL-Speicher zu konfigurieren, und Speichern der von dem CXL-Server übertragenen Dateien, die eingesetzt werden sollen, in dem Speicherplattenbereich.

7. Vorrichtung nach Anspruch 6, wobei ein Erzeugen der Zuordnungstabelle für gemeinsam genutzten Speicher basierend auf dem gemeinsam genutzten Speicher, der für den CXL-Server konfiguriert ist, wobei die Zuordnungstabelle für gemeinsam genutzten Speicher zum Beibehalten des konfigurierten gemeinsam genutzten Speichers und Aufzeichnen von Speicheradressen der einzusetzenden Dateien, die in den konfigurierten gemeinsam genutzten Speicher geschrieben wurden, wobei das Verfahren ferner Folgendes umfasst:
die Zuordnungstabelle für den gemeinsam genutzten Speicher umfasst eine Basisadresse für gemeinsam genutzten CXL-Speicher und die Speicheradressen der Dateien, die in dem Speicherplattenbereich eingesetzt werden sollen.

8. Vorrichtung nach Anspruch 7, wobei ein Senden von gemeinsam genutzten Informationen an das CXL-Endgerät als Reaktion auf die CXL-Interaktionsanforderung von dem CXL-Endgerät, wobei die gemeinsam genutzten Informationen die Speicheradressen der einzusetzenden Dateien umfassen und die gemeinsam genutzten Informationen dazu sind, das CXL-Endgerät in die Lage zu versetzen, die einzusetzenden Dateien zu erlangen, die basierend auf den gemeinsam genutzten Informationen in den gemeinsamen Speicher geschrieben worden sind, Folgendes umfasst:
die gemeinsam genutzten Informationen umfassen die Basisadresse für gemeinsam genutzten CXL-Speicher und die Speicheradressen der Dateien, die in dem Speicherplattenbereich einzusetzen sind, und die gemeinsam genutzten Informationen dienen dazu, das CXL-Terminal in die Lage zu versetzen, den Speicherplattenbereich über die einheitliche erweiterbare Firmware-Schnittstelle, UEFI, zu erkennen und zu booten, um ein System einzusetzen, das in den einzusetzenden Dateien enthalten ist.

9. Maschinenlesbares Speichermedium, wobei das maschinenlesbare Speichermedium maschinenausführbare Anweisungen speichert, die, wenn sie von einem Prozessor aufgerufen und ausgeführt werden, den Prozessor veranlassen, das Verfahren nach einem der Ansprüche 1 bis 4 durchzuführen.

10. Elektronische Vorrichtung, umfassend:
einen Prozessor (31) und ein maschinenlesbares Speichermedium nach Anspruch 9.

## Revendications

1. Procédé de déploiement de système, appliqué à un gestionnaire Compute Express Link, CXL, dans lequel le procédé comprend le fait de :
(S11) configurer une mémoire partagée pour un serveur CXL en réponse à une demande de configuration de mémoire partagée provenant du serveur CXL, dans laquelle la mémoire partagée est destinée à stocker des fichiers à déployer, qui sont écrits dans la mémoire partagée par le serveur CXL en réponse à un événement où le gestionnaire CXL achève la configuration de la mémoire partagée pour le serveur CXL ;
(S12) générer une table de mappage de mémoire partagée sur la base de la mémoire partagée configurée pour le serveur CXL, dans laquelle la table de mappage de mémoire partagée est destiné à maintenir la mémoire partagée configurée et à enregistrer les adresses de stockage des fichiers à déployer qui ont été écrits dans la mémoire partagée configurée ;
(S13) envoyer des informations partagées à un terminal CXL en réponse à une demande d'interaction CXL provenant du terminal CXL, dans lesquelles les informations partagées comprennent les adresses de stockage des fichiers à déployer, et les informations partagées sont destinées à permettre au terminal CXL d'obtenir les fichiers à déployer qui ont été écrits dans la mémoire partagée sur la base des informations partagées.

2. Procédé selon la revendication 1, dans lequel la configuration de la mémoire partagée pour le serveur CXL en réponse à la demande de configuration de mémoire partagée provenant du serveur CXL, dans laquelle la mémoire partagée est destinée à stocker des fichiers à déployer, qui sont écrits dans la mémoire partagée par le serveur CXL en réponse à l'événement où le gestionnaire CXL achève la configuration de la mémoire partagée pour le serveur CXL, comprend le fait de :
configurer une mémoire partagée CXL en réponse à une demande de configuration de mémoire partagée provenant du serveur CXL, invoquer un processus pour configurer davantage une zone de disque mémoire dans la mémoire partagée CXL configurée, et stocker les fichiers à déployer transmis par le serveur CXL dans la zone de disque mémoire.

3. Procédé selon la revendication 2, dans lequel, dans le cadre de la génération de la table de mappage de mémoire partagée sur la base de la mémoire partagée configurée pour le serveur CXL, dans laquelle la table de mappage de mémoire partagée est destinée à maintenir la mémoire partagée configurée et à enregistrer les adresses de stockage des fichiers à déployer qui ont été écrits dans la mémoire partagée configurée, le procédé comprenant en outre le fait que :
la table de mappage de mémoire partagée comprend une adresse de base de mémoire partagée CXL et les adresses de stockage des fichiers à déployer dans la zone de disque mémoire.

4. Procédé selon la revendication 3, dans lequel l'envoi d'informations partagées au terminal CXL en réponse à la demande d'interaction CXL provenant du terminal CXL, dans lesquelles les informations partagées comprennent les adresses de stockage des fichiers à déployer, et les informations partagées sont destinées à permettre au terminal CXL d'obtenir les fichiers à déployer qui ont été écrits dans la mémoire partagée sur la base des informations partagées, comprend le fait que :
les informations partagées comprennent l'adresse de base de mémoire partagée CXL et les adresses de stockage des fichiers à déployer dans la zone de disque mémoire, et les informations partagées sont destinées à permettre au terminal CXL de reconnaître la zone de disque mémoire par le biais d'une interface micrologicielle extensible unifiée, UEFI, et de démarrer, de manière à déployer un système compris dans les fichiers à déployer.

5. Dispositif de déploiement de système, adapté pour être appliqué à un gestionnaire Compute Express Link, CXL, dans lequel le dispositif comprend :
un premier module (21), configuré pour configurer une mémoire partagée pour un serveur CXL en réponse à une demande de configuration de mémoire partagée provenant du serveur CXL, dans laquelle la mémoire partagée est destinée à stocker des fichiers à déployer, qui sont écrits dans la mémoire partagée par le serveur CXL en réponse à un événement où le gestionnaire CXL achève la configuration de la mémoire partagée pour le serveur CXL ;
un deuxième module (22), configuré pour générer une table de mappage de mémoire partagée sur la base de la mémoire partagée configurée pour le serveur CXL, dans laquelle la table de mappage de mémoire partagée est destiné à maintenir la mémoire partagée configurée et à enregistrer les adresses de stockage des fichiers à déployer qui ont été écrits dans la mémoire partagée configurée ;
un troisième module (23), configuré pour envoyer des informations partagées à un terminal CXL en réponse à une demande d'interaction CXL provenant du terminal CXL, dans lesquelles les informations partagées comprennent les adresses de stockage des fichiers à déployer, et les informations partagées sont destinées à permettre au terminal CXL d'obtenir les fichiers à déployer qui ont été écrits dans la mémoire partagée sur la base des informations partagées.

6. Appareil selon la revendication 5, dans lequel la configuration de la mémoire partagée pour le serveur CXL en réponse à la demande de configuration de mémoire partagée provenant du serveur CXL, dans laquelle la mémoire partagée est destinée à stocker des fichiers à déployer, qui sont écrits dans la mémoire partagée par le serveur CXL en réponse à l'événement où le gestionnaire CXL achève la configuration de la mémoire partagée pour le serveur CXL, comprend le fait de :
configurer une mémoire partagée CXL en réponse à une demande de configuration de mémoire partagée provenant du serveur CXL, invoquer un processus pour configurer davantage une zone de disque mémoire dans la mémoire partagée CXL configurée, et stocker les fichiers à déployer transmis par le serveur CXL dans la zone de disque mémoire.

7. Appareil selon la revendication 6, dans lequel la génération de la table de mappage de mémoire partagée sur la base de la mémoire partagée configurée pour le serveur CXL, dans laquelle la table de mappage de mémoire partagée est destinée à maintenir la mémoire partagée configurée et à enregistrer les adresses de stockage des fichiers à déployer qui ont été écrits dans la mémoire partagée configurée, comprend le fait que :
la table de mappage de mémoire partagée comprend une adresse de base de mémoire partagée CXL et les adresses de stockage des fichiers à déployer dans la zone de disque mémoire.

8. Appareil selon la revendication 7, dans lequel l'envoi d'informations partagées au terminal CXL en réponse à la demande d'interaction CXL provenant du terminal CXL, dans lesquelles les informations partagées comprennent les adresses de stockage des fichiers à déployer, et les informations partagées sont destinées à permettre au terminal CXL d'obtenir les fichiers à déployer qui ont été écrits dans la mémoire partagée sur la base des informations partagées, comprend le fait que :
les informations partagées comprennent l'adresse de base de mémoire partagée CXL et les adresses de stockage des fichiers à déployer dans la zone de disque mémoire, et les informations partagées sont destinées à permettre au terminal CXL de reconnaître la zone de disque mémoire par le biais d'une interface micrologicielle extensible unifiée, UEFI, et de démarrer, de manière à déployer un système compris dans les fichiers à déployer.

9. Support de stockage lisible par machine, dans lequel le support de stockage lisible par machine stocke des instructions exécutables par machine qui, lorsqu'elles sont invoquées et exécutées par un processeur, amènent le processeur à mettre en œuvre le procédé selon l'une quelconque des revendications 1 à 4.

10. Dispositif électronique, comprenant : un processeur (31) et un support de stockage lisible par machine selon la revendication 9.
